Europäisches Patentamt

European Patent Office

Office européen des brevets

(19)

(11) Veröffentlichungsnummer: **0 021 117**
A1

## (12) EUROPÄISCHE PATENTANMELDUNG

(21) Anmeldenummer: 80103026.3

(22) Anmeldetag: 30.05.80

(51) Int. Cl.³: **B 29 C 27/02**

(30) Priorität: 01.06.79 DE 2922438

(43) Veröffentlichungstag der Anmeldung: 07.01.81
Patentblatt 81/1

(84) Benannte Vertragsstaaten: **BE FR GB IT NL**

(71) Anmelder: **Stiegler, Karl Heinz, Werastrasse 24,
D-7000 Stuttgart 1 (DE)**

(72) Erfinder: **Schulze, Ehrhart, Königsberger Strasse 11,
D-7012 Fellbach (DE)**

(74) Vertreter: **Patentanwälte Dr. Wolff; H. Bartels
Dipl.-Chem. Dr. Brandes Dr.-Ing. Held; Dipl.-Phys. Wolff,
Lange Strasse 51, D-7000 Stuttgart 1 (DE)**

(54) **Maschine zum Bearbeiten einer bewegten Werkstoffbahn mittels eines beweglichen Schweisswerkzeugs.**

(57) Eine Maschine zum Herstellen von Schweißnähten in einer Werkstoffbahn, die in ihrer Längsrichtung durch den Spalt zwischen einer sich um ihre Achse drehenden Gegenwalze (8) und einer angetriebenen Schweißkante (12) bewegt und dort von dieser periodisch an die Gegenwalze (8) angedrückt wird. Schweißkante (12) und Gegenwalze (8) werden über ein Getriebe (39) angetrieben, das für den Antrieb der Gegenwalze (8) zwei über eine Schrägverzahnung miteinander in Engriff stehende Glieder (55, 56) aufweist, die zum Erzeugen einer zusätzlichen Drehung der Gegenwalze (8) relativ zueinander verschoben werden, um die linienförmige Belastung der Gegenwalze (8) durch die Schweißkante (12) gleichmäßig auf deren Umfang zu verteilen.

Reg.-Nr. 125 946

Karl Heinz Stiegler, 7000 Stuttgart

**Maschine** zum Bearbeiten einer bewegten
Werkstoffbahn mittels eines beweglichen
Schweißwerkzeugs

21. Mai 1979
487375 rls

Die Erfindung betrifft eine Maschine zum Bearbeiten einer
in ihrer Längsrichtung bewegten Werkstoffbahn mittels eines
beweglichen Schweißwerkzeugs, das beim Schweißvorgang die
Werkstoffbahn im wesentlichen längs einer Berührungslinie
an den Umfang einer drehbaren Gegenwalze andrückt, mit einem
Antrieb, der der Gegenwalze eine Drehbewegung vermittelt
und das Schweißwerkzeug periodisch in seine beim Schweißvorgang eingenommene, die Werkstoffbahn berührende Schweißstellung und aus dieser Stellung heraus bewegt, mit einer
ersten, die Bewegung des Schweißwerkzeugs steuernden Getriebewelle und einer zweiten, die Drehbewegung der Gegenwalze
steuernden Getriebewelle und mit einem die Bewegung des
Schweißwerkzeuges mit der Drehbewegung der Gegenwalze kuppelnden Getriebe.

Maschinen dieser Art sind bereits bekannt und werden u.a.
zum Herstellen von Kunststoffbeuteln eingesetzt, wobei
Trennschweißvorgänge an einer zweilagigen Bahn aus thermoplastischem Kunststoff durchgeführt werden. Beim Betrieb
dieser Maschinen drückt die heiße Schweißkante des Schweißwerkzeugs im Bereich der Berührungslinie den Belag der
Gegenwalze zusammen und hinterläßt auf deren gummielastischem Überzug, bei dem es sich normalerweise um ein Tetra-fluoräthylen-Glasgewebe handelt, linienförmige Eindrück-spuren. Die linienförmigen Belastungen der Gegenwalze stellen, wenn 300 Schweißungen pro Minute oder mehr ausgeführt werden sollen, eine hohe mechanische und thermische Belastung der Gegenwalze dar, so daß es wünschenswert ist, die Eindrücklinien möglichst gleichmäßig und definiert auf den gesamten Umfang der Gegenwalze zu verteilen.

Bei einer aus der CH-PS 515 107 bekannten Schweißmaschine ist in dem Bestreben, ein lückenloses Bestreichen des Mantels der Gegenwalze durch das Schweißwerkzeug zu erreichen, die Gegenwalze von einer "frei schwimmend" auf ihr angeordneten Hülse aus mit Tetrafluoräthylen imprägniertem Glasfaserstoff umgeben. Durch die schwimmende Anordnung dieser Hülse soll erreicht werden, daß sie sich zufällig gegenüber dem Amboßbereich der Gegenwalze verdreht, so daß in dem Amboßbereich, wo die Schweißkante auf die Gegenwalze einwirkt, sich immer

- 3 -

wieder ein anderer Umfangsbereich der schwimmenden Hülse der Schweißkante darbieten soll. Diese Lösung ist gänzlich unbefriedigend. Da die Bewegung der die Gegenwalze umgebenden Hülse zufallsabhängig ist, ist in keiner Weise gewährleistet, daß die Verteilung der Berührungslinien auf der Hülse gleichmäßig erfolgt. Wie die genannte CH-PS zeigt, handelt es sich bei deren Gegenstand außerdem um eine schmale Verpackungsmaschine mit nur geringer Leistung. Dabei mag ein Betrieb mit einer Gegenwalze möglich sein, deren Umfang nicht gummielastisch verformt wird. Bei größeren Schweißmaschinen höherer Leistung ist jedoch das Eindrücken der Schweißkante in eine gummielastische Gegenlage zur Erreichung einer größeren Berührungszeit unbedingt erforderlich. Die in der genannten CH-PS gezeigte Ausführungsform mit einer eine Amboßleiste der Gegenwalze schwimmend umgebenden Hülse ist daher bei Schweißmaschinen höherer Leistung auch insofern nicht brauchbar.

Der Erfindung liegt die Aufgabe zugrunde, eine Maschine der in Rede stehenden Art zu schaffen, bei der sichergestellt ist, daß die linienförmigen Belastungen der Oberfläche der Gegenwalze durch die Schweißkante des Schweißwerkzeugs ganz gleichmäßig auf den gesamten Umfang der Gegenwalze verteilt werden.

Bei einer Maschine der eingangs genannten Art ist diese Aufgabe erfindungsgemäß dadurch gelöst, daß zwei die Drehbewegung übertragende Getriebeglieder des Getriebes über eine Schrägverzahnung miteinander in Eingriff stehen und relativ zueinander axial verschiebbar angeordnet sind und daß eine Verschiebevorrichtung zum Erzeugen der relativen axialen Verschiebebewegung dieser Getriebeglieder vorgesehen ist. Durch die relative Axialverschiebung wird erreicht, daß zu der vom Antrieb hervorgerufenen, vom Getriebe übertragenen Drehbewegung eine zusätzliche Drehbewegung überlagert wird. Dadurch ist die Möglichkeit geschaffen, auch diejenigen Umfangsbereiche der Gegenwalze, die zwischen den Berührungslinien gelegen sind, die sich ohne überlagerte Zusatzdrehung aufgrund der Übersetzung und z.B. der Zahnteilung des Getriebes ergeben, für die Berührung mit der Schweißkante zu nutzen, d.h. sozusagen diese ansonsten ungenutzten Zwischenbereiche mit Berührungslinien "auszufüllen".

Bei einem bevorzugten Ausführungsbeispiel sind als über die Schrägverzahnung gekoppelte Getriebeglieder zwei schräg verzahnte, miteinander kämmende Stirnräder vorgesehen. Eines der Stirnräder ist vorzugsweise fest auf der Welle angeordnet und so breit ausgeführt, daß das schmäler ausgebildete andere Stirnrad, welches axial verschiebbar und undrehbar auf einer Welle sitzt, eine axiale Verschiebebewegung durchführen kann, ohne daß die beiden Stirnräder miteinander außer Zahneingriff kommen.

Bei einem bevorzugten Ausführungsbeispiel sind die Breite des einen Stirnrads und die Weglänge der von der Verschiebevorrichtung erzeugten Verschiebebewegung des schmalen Stirnrads sowie die Schräge der Verzahnung der Stirnräder so gewählt, daß die bei einer vollständigen axialen Verschiebebewegung erzeugte Relativdrehung einer Teilung der Verzahnung der Stirnräder entspricht.

Bei einem anderen Ausführungsbeispiel ist vorgesehen, daß die Schrägverzahnung in Form einer Spieralnut einer Welle ausgebildet ist, auf der ein axial relativ zu dieser verschiebbares, mit der Nut in Eingriff stehendes Getrieberad sitzt.

Die Erfindung wird nachfolgend anhand der Zeichnung im einzelnen erläutert.

Es zeigen:

Fig. 1 eine schematisch vereinfacht gezeichnete Ansicht eines Ausführungsbeispiels der Bearbeitungsmaschine;

Fig. 2 eine Ansicht der Schweißwalze und der Gegenwalze der Maschine, wobei die Schweißwalze teilweise aufgebrochen dargestellt ist;

Fig. 3 einen Schnitt nach der Linie III-III von Fig. 2;

Fig. 4 einen in größerem Maßstab und abgebrochen gezeichneten Ausschnitt des Getriebes mit über eine Schrägverzahnung miteinander gekoppelten Getriebegliedern gemäß einem ersten Ausführungsbeispiel der Maschine und

Fig. 5 eine der Fig. 4 entsprechende Ansicht eines zweiten Ausführungsbeispiels.

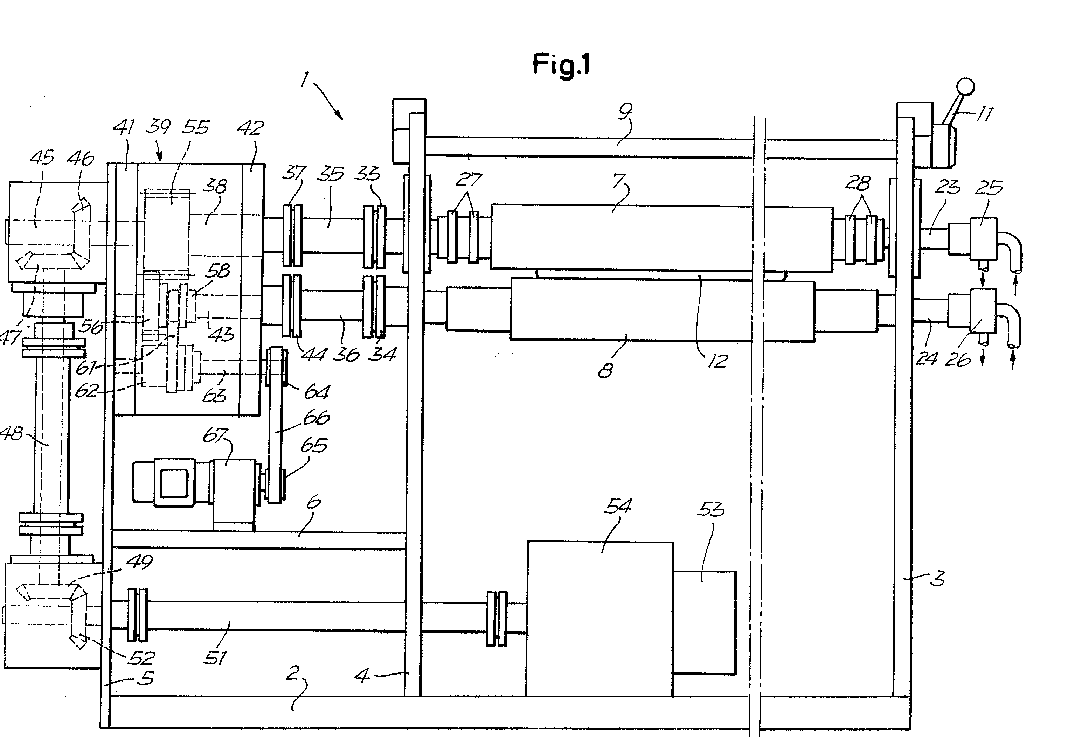

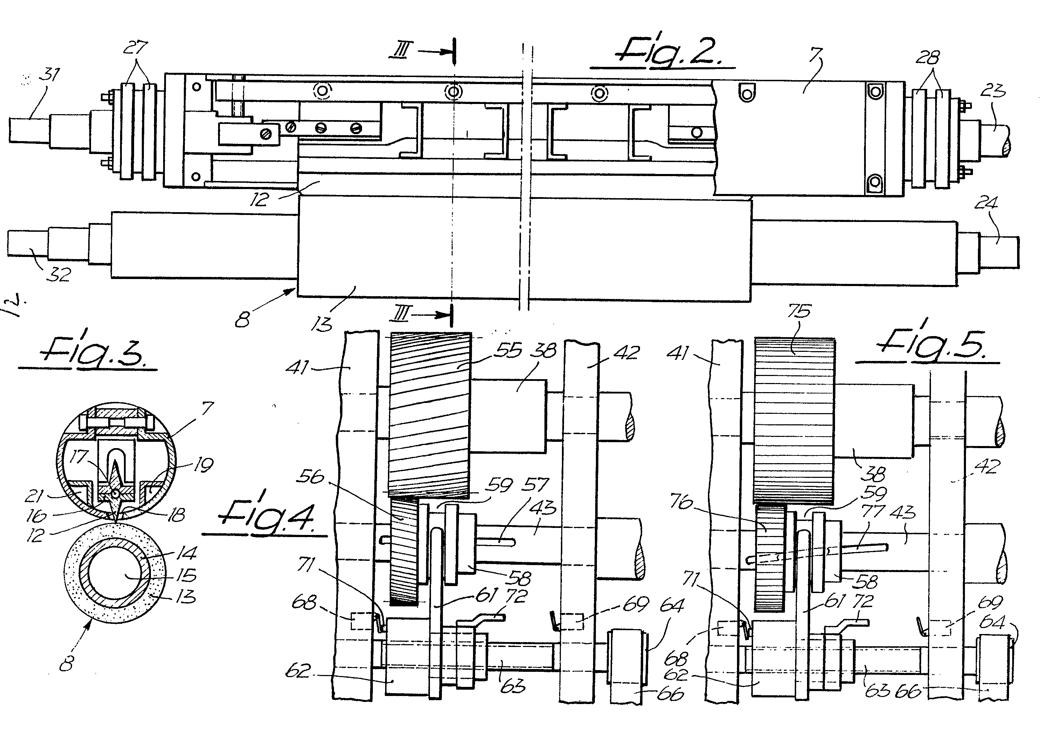

Fig. 1 zeigt eine als Ganzes mit 1 bezeichnete Maschine, mittels deren an thermoplastischen Folienbahnen Schweißvorgänge durchführbar sind, beispielsweise um Kunststoffbeutel herzustellen. Die Maschine 1 weist ein Fundament 2 auf, von dem sich das Maschinengestell bildende Seitenwände 3, 4 und 5 nach aufwärts erstrecken. Die Seitenwände 4 und 5 sind durch eine Traverse 6 miteinander verbunden. Zwischen den Seitenwänden 3 und 4 sind eine Schweißwalze 7 und eine Gegenwalze 8 drehbar gelagert, deren Aufbau in Fig. 2 und 3 genauer dargestellt ist. Oberhalb der Schweißwalze 7 ist eine Einstellwelle 9 am Maschinengestell gelagert, die mittels einer Handhabe 11 drehbar ist und über eine nicht dargestellte Exzentereinrichtung eine Einstellung eines für eine bestimmte Schweißdauer gewünschten Abstandes der Schweißwalze 7 von der Gegenwalze 8 ermöglicht.

Wie insbesondere aus Fig. 2 und 3 zu ersehen ist, weist die Gegenwalze 8 für die Zusammenwirkung mit einer beheizten Schweißkante 12 der Schweißwalze 7 eine Ummantelung 13 auf, bei der es sich um eine Gummiauflage mit Teflonglasgewebeüberzug handelt. Die Ummantelung sitzt auf einer Stahlhülse 14, die einen inneren Hohlraum 15 umgibt, der mit beheiztem Thermoöl gefüllt ist.

Die Schweißkante 12 erstreckt sich von einer Leiste 16, die mittels einer Heizpatrone 17 beheizt wird, durch einen Schlitz 18 hindurch nach außen, der im Mantel der Schweißwalze 7 ausgespart ist (Fig. 3). Aus Fig. 3 ist zu ersehen, daß an der Innenseite des Mantels der Schweißwalze, dem Schlitz 18 benachbart, Kühlkanäle 19 und 21 ausgebildet sind, durch die im Betrieb Kühlwasser zirkuliert, das durch Kühlmittelbohrungen zu- und abgeführt wird, die nicht dargestellt sind und im in der Zeichnung von Fig. 2 rechts gelegenen Wellenzapfen 23 nach außen münden. Auch am Wellenzapfen 24 der Gegenwalze 8 münden entsprechende Bohrungen, die ebenfalls nicht dargestellt sind und für die Zu- bzw. Abfuhr des Thermoöls in und aus dem Hohlraum 15 dienen. In Fig. 1 sind an den Wellenzapfen 23 und 24 rotierende Anschlußkupplungen 25 bzw. 26 gezeigt, die zur Kühlmittelzu- bzw. -abfuhr für die Schweißwalze 7 und zur Zufuhr bzw. Abfuhr es Thermoöls für die Gegenwalze 8 dienen.

Die Schweißwalze 7 weist außerdem ein Schleifringpaar 27 für den elektrischen Anschluß der Heizpatrone 17 sowie ein zweites Schleifringpaar 28 für den elektrischen Anschluß von Temperaturfühlern auf.

An ihren in Fig. 2 links gelegenen Wellenzapfen 31 und 32 sind die Schweißwalze 7 bzw. die Gegenwalze 8 über Kupplungen 33 bzw. 34 mit Zwischenwellen 35 und 36 auf Drehung verbunden (Fig. 1). Die Zwischenwelle 35 ist über eine Kupplung 37 mit einer ersten Getriebewelle 38 eines Getriebes 39 auf Drehung verbunden. Die Kupplungen 33 und 37 sind als drehsteife, jedoch gelenkige Kupplungen ausgebildet, so daß eine Wellenverlagerung innerhalb gewisser Grenzen und damit eine Lageeinstellung der Schweißwalze 7 relativ zur Gegenwalze 8 mittels der Einstellwelle 9 möglich ist.

Das Getriebe 39 mit seinen Lagerdeckeln 41 und 42 dient dazu, um von der ersten Getriebewelle 38, die mit der Schweißwalze 7 drehfest verbunden ist, eine Drehbewegung auf eine zweite Getriebewelle 43 zu übertragen, die über eine Kupplung 44 mit der Zwischenwelle 36 und dementsprechend mit der Gegenwalze 8 drehfest verbunden ist. Die erste Getriebewelle 38 dient als antriebsseitige Getriebewelle und weist einen über den Lagerdeckel 41 hinaus nach außen verlängerten Wellenabschnitt 45 auf, auf dem ein Kegelrad 46 befestigt ist. Das Kegelrad 46 kämmt mit einem Kegelrad 47, das am oberen Ende einer Welle 48 befestigt ist, an deren unterem Ende ein weiteres Kegelrad 49 befestigt ist, das mit einem auf einer Hauptantriebswelle 51 befestigten weiteren Kegelrad 52 kämmt. Die Hauptantriebswelle 51 ist von einem Antriebsmotor 53 über ein Zwischengetriebe 54 antreibbar, das in bekannter Weise so ausgebildet ist, daß bei konstanter Drehzahl des Antriebsmotors 53 die Hauptantriebswelle 51 mit ungleichförmiger Drehzahl antreibbar ist.

Zur Übertragung der Drehbewegung der Getriebewelle 38 auf die Getriebewelle 43 sind im Getriebe 39 miteinander kämmende Stirnräder 55 und 56 vorgesehen, von denen das Stirnrad 55 breit ausgebildet und auf der Getriebewelle 38 befestigt ist. Das mit der Getriebewelle 43 drehfest verbundene Stirnrad 56 ist demgegenüber schmäler. Die Schweißkante 12 der Schweißwalze 7 legt auf einem bestimmten Radius $r_k$ den Weg $2 \cdot r_k \cdot \pi$ pro Umdrehung der Schweißwalze zurück. Beim Ausführungsbeispiel besitzt das Stirnrad 55 den Teilkreisdurchmesser $2r_k$ und eine gerade Zähnezahl. Die Gegenwalze 8 besitzt einen kleineren Durchmesser als die Größe $2r_k$, und das Stirnrad 56 hat einen Teilkreisdurchmesser, der dem Durchmesser der Gegenwalze 8 entspricht. Das Stirnrad 56 weist beim Ausführungsbeispiel außerdem eine ungerade Zähnezahl auf. Dadurch wird zunächst erreicht, daß die Berührungslinienzahl des Zusammenwirkens von Schweißkante 12 und Gegenwalze 8 auf deren Ummantelung 13 gleich der Zähnezahl des Stirnrads 56 ist. Die Abstände der Berührungslinien auf der Ummantelung 13 entsprechen daher etwa der Zahnteilung. Bei Verwendung gerader Zähnezahlen beider Stirnräder 55 und 56 würde sich der Abstand der Berührungslinien verdoppeln. .

Um eine lückenlose Belastung der Ummantelung 13 der Gegenwalze 8 über deren gesamten Umfang zu erreichen, ist in dem Zuge der Kraftübertragung zwischen der Getriebewelle 38 und der Getriebewelle 43 im Getriebe 39 eine Schrägverzahnung vorgesehen. Außerdem ist die Möglichkeit geschaffen, die über die Schrägverzahnung miteinander gekoppelten Getriebeglieder axial relativ zueinander zu verschieben, um zu der von der antriebsseitigen Getriebewelle 38 auf die abtriebsseitige Getriebewelle 43 übertragenen Drehbewegung eine Zusatzdrehung zu überlagern, die durch Axialverschiebung erzeugt wird.

Bei dem in Fig. 1 und 4 dargestellten ersten Ausführungsbeispiel sind die Stirnräder 55 und 56 als Schrägzahnstirnräder ausgebildet, vgl. insbesondere Fig. 4. Das breite Stirnrad 55 ist auf der antriebsseitigen Getriebewelle 38 axial unverschiebbar angeordnet. Das schmälere schräg verzahnte Stirnrad 56 ist auf der abtriebsseitigen Getriebewelle 43, die mit einer achsparallelen Keilnut 57 versehen ist, drehfest, jedoch axial verschiebbar angeordnet. Das Stirnrad 56 weist einen Nabenteil 58 auf, in dem eine Ringnut 59 ausgebildet ist, in die eine Schubgabel 61 einer Verschiebevorrichtung zum axialen Verschieben des schräg verzahnten Stirnrads 56 auf der Getriebewelle 43 eingreift. Die Schubgabel 61 ist mit einer Mutter 62 verbunden, die auf einer Gewindespindel 63 sitzt. Über Riemenscheiben 64 und 65, über die ein Zahnriemen 66 läuft, ist die Gewindespindel 63 mittels einer umsteuerbaren Motor-Getriebeeinheit 67 in beiden Drehrichtungen antreibbar, so daß das schräg verzahnte Stirnrad 56 im Betrieb periodisch über die Breite des schräg verzahnten Stirnrads 55 axial hin und herbewegt wird. Zum Umsteuern der Drehbewegung der Motor-Getriebeeinheit 67 und damit der Gewindespindel 63 sind Endschalter 68 und 69 vorgesehen, die mit Anschlägen 71 bzw. 72 an der Mutter 62 zusammenwirken.

Um eine besonders kippfreie Führung der Schubgabel 61 zu gewährleisten, können beidseits der Gewindespindel 63 nicht dargestellte Führungsstangen vorhanden sein, an denen die Schubgabel 61 geführt ist.

Beim Ausführungsbeispiel ist das Getriebe 39 so ausgelegt, daß ohne Axialverschiebung der schräg verzahnten Stirnräder 55, 56 relativ zueinander die Schweißkante Berührungslinien auf der Gegenwalze 8 erzeugt, die einen der Zahnteilung entsprechenden Abstand voneinander haben. Durch axiales Verschieben des Stirnrads 56 mittels der Verschiebevorrichtung wird aufgrund der Schräge der Verzahnung eine zusätzliche Drehbewegung zu der normalen Drehbewegung der Getriebewelle 43 überlagert. Diese überlagerte Drehbewegung bewirkt, daß die Berührungslinien auf der Gegenwalze 8 innerhalb der Lücken wandern, die sich beim Betrieb der Maschine ohne Axialverschiebung des Stirnrads 56 ergäben. Die Schräge der Schrägverzahnung der Stirnräder 55, 56 und die Drehzahl der Gewindespindel 63 der Verschiebevorrichtung sind beim Ausführungsbeispiel im Verhältnis zur Drehzahl der Schweißwalze 7 so gewählt, daß von Schweißvorgang zu Schweißvorgang eine Verschiebung der Berührungslinie um etwa 0,1 mm aufgrund der zusätzlichen, überlagerten Drehbewegung erhalten wird. Da die Breite der schmälsten mit der Maschine herzustellenden Schweißnaht und dementsprechend die Breite der Berührungslinien auf der Gegenwalze 8 größer ist als 0,1 mm wird dadurch ein lückenloses Verstreichen des Umfangs der Gegenwalze 8 erreicht.

Bei dem in Fig. 5 dargestellten zweiten Ausführungsbeispiel sind anstelle der schräg verzahnten Stirnräder 55 und 56 des ersten Ausführungsbeispiels Stirnräder 75 und 76 mit Geradverzahnung vorgesehen, von denen das Stirnrad 75 breit ausgeführt und drehfest und axial unverschiebbar auf der Getriebewelle 38 angeordnet ist. Das geradverzahnte Stirnrad 76 ist, wie das schräg verzahnte Stirnrad 56 beim ersten Ausführungsbeispiel, demgegenüber schmäler ausgebildet und auf der Getriebewelle 43 axial verschiebbar angeordnet. Zur Bildung der Schrägverzahnung, über die zwei Getriebeglieder miteinander in Eingriff stehen, die im Zug der Kraftübertragung zwischen der Getriebewelle 38 und der Getriebewelle 43 angeordnet sind, ist bei diesem Ausführungsbeispiel anstelle der achsparallelen Keilnut 57 des ersten Ausführungsbeispiels eine Spiralnut 77 in der Getriebewelle 43 ausgebildet, mit der das axial verschiebbare Stirnrad 76 über einen Keil auf Drehung verbunden ist. Aufgrund dieser durch die Spiralnut 77 in Verbindung mit dem Keil des Stirnrads 76 gebildeten Schrägverzahnung ergibt sich in entsprechender Weise eine überlagerte Zusatzdrehung, wenn das schmälere Stirnrad 76 über die Breite des Stirnrads 75 axial hin und herbewegt wird.

- 11 -

## Patentansprüche

1. Maschine zum Bearbeiten einer in ihrer Längsrichtung bewegten Werkstoffbahn mittels eines beweglichen Schweißwerkzeugs, das beim Schweißvorgang die Werkstoffbahn im wesentlichen längs einer Berührungslinie an den Umfang einer drehbaren Gegenwalze andrückt, mit einem Antrieb, der der Gegenwalze eine Drehbewegung vermittelt und das Schweißwerkzeug periodisch in seine beim Schweißvorgang eingenommene, die Werkstoffbahn berührende Schweißstellung und aus dieser Stellung heraus bewegt, mit einer ersten, die Bewegung des Schweißwerkzeugs steuernden Getriebewelle und einer zweiten, die Drehbewegung der Gegenwalze steuernden Getriebewelle und mit einem die Bewegung des Schweißwerkzeugs mit der Drehbewegung der Gegenwalze kuppelnden Getriebe, dadurch gekennzeichnet, daß zwei die Drehbewegung übertragende Getriebeglieder (55, 56; 76, 43) des Getriebes (39) über eine Schrägverzahnung miteinander in Eingriff stehen und relativ zueinander axial verschiebbar angeordnet sind und daß eine Verschiebevorrichtung (59, 61, 62, 63) zum Erzeugen der relativen axialen Verschiebebewegung dieser Getriebeglieder vorgesehen ist.

2. Maschine nach Anspruch 1, dadurch gekennzeichnet, daß als über die Schrägverzahnung gekoppelte Getriebeglieder zwei schräg verzahnte, miteinander kämmende Stirnräder (55, 56) vorgesehen sind.

3. Maschine nach Anspruch 1, dadurch gekennzeichnet, daß die Schrägverzahnung in Form einer Spiralnut (77) einer Welle (43) ausgebildet ist, auf der ein axial relativ zu dieser verschiebbares, mit der Nut (77) in Eingriff stehendes Getrieberad (76) sitzt.

4. Maschine nach Anspruch 2 oder 3, dadurch gekennzeichnet, daß mit der ersten (38) und der zweiten Getriebewelle (43) je eines von zwei miteinander kämmenden Stirnrädern (55, 56; 75, 76) drehfest verbunden ist, daß die erste Getriebewelle (38) als antriebsseitige Welle dient und daß die zweite Getriebewelle (43) als abtriebsseitige Welle über die Stirnräder (55, 56; 75, 76) antreibbar ist.

5. Maschine nach den Ansprüchen 2 und 4, dadurch gekennzeichnet, daß das auf der ersten, antriebsseitigen Getriebewelle (38) sitzende, schräg verzahnte Stirnrad (55) mit dieser fest verbunden ist und die zweite Getriebewelle (43) als Keilwelle mit achsparalleler Keilnut (57) ausgebildet ist, auf der das andere schräg verzahnte Stirnrad (56) axial verschiebbar angeordnet ist.

6. Maschine nach den Ansprüchen 4 oder 5, dadurch gekennzeichnet, daß das fest angeordnete, antriebsseitige Stirnrad (55, 75) breiter ist als das axial verschiebbar angeordnete Stirnrad (56, 76) und daß die Breite des antriebsseitigen Stirnrads (55, 75), die Weglänge der von der Verschiebevorrichtung (59, 61, 62, 63) erzeugten Verschiebebewegung des schmalen Stirnrads (56, 76) sowie die Schräge der Schrägverzahnung so gewählt sind, daß die bei einer vollständigen axialen Verschiebebewegung erzeugte Relativdrehung einer Teilung der Verzahnung der Stirnräder (55, 56; 75, 76) entspricht.

7. Maschine nach Anspruch 6, dadurch gekennzeichnet, daß die Geschwindigkeit der Verschiebebewegung des schmalen Stirnrads (56, 76) im Verhältnis zur Drehzahl der abtriebsseitigen, die Gegenwalze (8) antreibenden Getriebewelle (43) so gewählt ist, daß pro Umdrehung der Gegenwalze (8) zu deren Drehbewegung eine Zusatzdrehung überlagert wird, deren Drehwinkel einer am Umfang der Gegenwalze (8) gemessenen Bogenlänge von der Größe eines Bruchteils der Breite der schmälsten mit der Maschine (1) herzustellenden Schweißnaht entspricht.

8. Maschine nach einem der Ansprüche 4 bis 7, dadurch gekennzeichnet, daß die Verschiebevorrichtung eine in beiden Drehrichtungen antreibbare Gewindespindel (63) aufweist, auf der eine Mutter (62) sitzt, die mit einem sich radial von dieser erstreckenden Mitnehmerglied (61) in eine Ringnut (59) eingreift, die an der Nabe (58) des abtriebsseitigen, schmäleren Stirnrads (56, 76) ausgebildet ist.

- . -

- 1/2 -

**Fig.1**

0021117.

Fig.2.

Fig.3.

Fig.4.

Fig.5.

- 2/2 -

### Europäisches Patentamt

## EUROPÄISCHER RECHERCHENBERICHT

EP 80 10 3026.3

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| D | CH - A - 515 107 (FMC CORP.) <br> * Unteranspruch 4 * <br> -- | 1 | B 29 C 27/02 |
| | US - A - 3 850 780 (D.C. CRAWFORD et al.) <br> * Spalte 3, Zeilen 54 bis 59 * <br> -- | 1,2, 4,5 | |
| P | DE - B1 - 2 810 127 (K.-H. STIEGLER) <br> * Spalte 5, Zeilen 28 bis 31 * <br> -- | 1 | |
| A | DE - A - 1 479 835 (G. WIEDMANN KG) <br> * Seite 4, Zeilen 6, 7 * <br> -- | | **RECHERCHIERTE SACHGEBIETE (Int. Cl.³)** <br><br> B 29 C 24/00 <br> B 29 C 27/00 |
| A | DE - C - 1 479 807 (VEB POLYGRAPH LEIPZIG) <br> * Ansprüche 1 bis 3 * <br> ---- | | B 65 B 9/12 |
| A | DE - A - 1 604 601 (H. LEHMACHER) <br> * Anspruch 1 * <br> ---- | | |

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 25-09-1980 | BITTNER |

EPA form 1503.1 06.78